# EUROPÄISCHE PATENTSCHRIFT

(11) **EP 2 504 880 B1**
(45) Veröffentlichungstag und Bekanntmachung des Hinweises auf die Patenterteilung: **09.01.2019**
(21) Anmeldenummer: 10779821.7
(22) Anmeldetag: 22.11.2010
(51) Int. Cl.: H01M 10/60

(54) **SYSTEM FÜR EIN KRAFTFAHRZEUG ZUM ERWÄRMEN UND/ODER KÜHLEN EINER BATTERIE UND EINES KRAFTFAHRZEUGINNENRAUMES**
SYSTEM FOR A MOTOR VEHICLE FOR HEATING AND/OR COOLING A BATTERY AND A MOTOR-VEHICLE INTERIOR
SYSTÈME POUR UN VÉHICULE AUTOMOBILE, DESTINÉ À RÉCHAUFFER ET/OU REFROIDIR UN ACCUMULATEUR ET UN HABITABLE DU VÉHICULE AUTOMOBILE

(30) Priorität: 23.11.2009 DE 102009054186
(43) Veröffentlichungstag der Anmeldung: 03.10.2012
(73) Patentinhaber: MAHLE Behr GmbH & Co. KG, 70469 Stuttgart (DE)
(72) Erfinder: HIMMER, Thomas, 73326 Reichenbach (Deggingen) (DE); WESNER, Markus, 70372 Stuttgart (DE)
(74) Vertreter: Grauel, Andreas
(86) Internationale Anmeldenummer: PCT/EP2010/067948
(87) Internationale Veröffentlichungsnummer: WO 2011/061337

(56) Entgegenhaltungen:
- EP-A2- 1 264 715
- DE-A1-102005 048 241
- DE-A1-102006 004 414
- DE-A1-102007 012 893
- DE-A1-102008 017 113
- FR-A1- 2 884 058
- US-A1- 2006 137 853

## Beschreibung

Die Erfindung betrifft ein System für ein Kraftfahrzeug zum Erwärmen und/oder Kühlen einer Batterie und eines Kraftfahrzeuginnenraumes gemäß dem Oberbegriff des Anspruches 1, ein Verfahren zum Erwärmen und/oder Kühlen einer Batterie und eines Kraftfahrzeuginnenraumes gemäß dem Oberbegriff des Anspruches 10 und eine Kraftfahrzeugklimaanlage nach Anspruch 13.

In Hybridfahrzeugen mit einem Verbrennungsmotor und einem Elektromotor sowie auch in Elektrofahrzeugen, die ausschließlich von einem Elektromotor angetrieben werden, ist im Allgemeinen eine elektrische Heizeinrichtung zum Erwärmen der Luft des Fahrzeuginnenraumes erforderlich. In Hybridfahrzeugen mit einem Verbrennungsmotor reicht im Allgemeinen die Abwärme des Verbrennungsmotors nicht aus, um den Fahrzeuginnenraum zu erwärmen. Bei Elektrofahrzeugen ist kein Verbrennungsmotor vorhanden, so dass Wärme zum Erwärmen der Luft des Fahrzeuginnenraumes ausschließlich von der elektrischen Heizeinrichtung zur Verfügung gestellt wird.

Die Batterie des Hybridfahrzeuges oder des Elektrofahrzeuges muss erwärmt oder gekühlt werden, um eine ausreichende Betriebstemperatur der Batterie, beispielsweise in einem Temperaturbereich zwischen 0°C und 40°C zu erhalten. Bei einer Entnahme von elektrischer Energie aus der Batterie gibt die Batterie Wärme ab, so dass die Batterie gekühlt werden muss, damit sich diese nicht auf Temperaturen von mehr als 30°C oder 40°C erwärmt. Bei geringen Außentemperaturen, die beispielsweise unterhalb von 0°C liegen, ist ein Erwärmen der Batterie erforderlich, damit elektrische Energie von der Batterie entnommen werden kann als auch eine Aufladung mit elektrischer Energie möglich ist. Hierzu weist das Hybrid- oder Elektrofahrzeug einen Kühlmittelkreislauf auf, mit dem die Batterie gekühlt, insbesondere mit Umgebungsluft gekühlt werden kann.

Die DE 101 28 164 A1 zeigt ein Fahrzeug-Kühlsystem für ein Elektro- oder Hybridfahrzeug. Das Fahrzeug-Kühlsystem weist einen Kühlmittelkreislauf auf, der thermisch mit einer Batterie gekoppelt ist. In den Kühlmittelkreislauf mit der Batterie ist ferner ein Verdampfer eines Kältekreises mit einem Kondensator, einem Kompressor und einem Expansionsventil eingebaut. Mittels des Verdampfers kann der Kühlmittelkreislauf mit der Batterie gekühlt werden, so dass dadurch mittels des Kältekreises auch die Batterie gekühlt werden kann. Außerdem ist es bekannt, in einem derartigen Fahrzeug-Kühlsystem den Kühlmittelkreislauf für die Batterie mit einem Umgebungsluft-Wärmeübertrager zu koppeln, so dass bei niedrigen Außentemperaturen die Batterie durch Abgabe der Wärme an die Umgebungsluft gekühlt werden kann, ohne dass der Kältekreis in Betrieb ist. In nachteiliger Weise steht jedoch die Abwärme der Batterie damit nicht zum erwärmen des Kraftfahrzeuginnenraumes zur Verfügung und ein zusätzlicher Umgebungsluft-Wärmeübertrager ist erforderlich.

Aus der DE 10 2008 017 113 A1 ist ein Verdampfer als Wärmeübertrager für ein Kraftfahrzeug bekannt. Eine Mehrzahl von Platten sind parallel zueinander in Hochrichtung gestapelt als Wärmeübertrager in Platten- bzw. Scheibenbauweise. Zwischen den Platten bildet sich ein erster Strömungsraum für Kältemittel als erstes Fluid und ein zweiter Strömungsraum für ein zweites Fluid, so dass Wärme von dem zweiten Fluid auf das Kältemittel übertragen werden kann.

Das Dokument EP 1 264 715 A2 offenbart ein Fahrzeug-Kühlsystem zum Kühlen einer temperaturerhöhenden Einrichtung, insbesondere Fahrzeugbatterie oder Brennstoffzelle, vorzugsweise für ein Elektrofahrzeug oder Hybridfahrzeug, mit einem die Einrichtung unter Einbeziehung einer die Luftkonditionierung der Fahrgastzelle des Fahrzeugs dienenden Klimaanlage kühlenden Kühlmittel. Das Kühlmittel ist eine Kühlflüssigkeit, die in einem Kühlkreislauf geführt wird und zu ihrer Kühlung thermisch in den Kältekreislauf der Klimaanlage eingebunden ist.

Das Dokument DE 10 2006 004 414 A1 offenbart einen Wärmetauscher eines Sekundärkreislaufes für eine Fahrzeugklimaanlage und eine Fahrzeugklimaanlage mit einem thermodynamischen Primärkreislauf, der als Temperatursenke einen Verdampfer und eine Zu- bzw. Ableitung zum Verdampfer aufweist, und einem Sekundärkühlkreislauf zur Kühlung von Elektroaggregaten bzw. Elektronikelementen. Der Sekundärkreislauf umfasst einen Wärmetauscher, der in Wärmeleitkontakt mit der Temperatursenke des Primärkreislaufes steht.

Das Dokument DE 10 2007 012 893 A1 offenbart einen Batteriekühler. Der Batteriekühler ist in einen Batteriekasten integriert und weist ein externes Kühlmodul mit einem Axiallüfter auf. Es ist ein Wärmetauscher/Verdampfer vorgesehen, der zwischen dem Batteriekühler und dem externen Kühlmodul angeordnet ist.

Das Dokument DE 10 2005 048 241 A1 offenbart ein Zweikreisbatteriekühlsystem, welches einen als Kältekreis ausgebildeten Primärkreislauf und einen als Kühlmittelkreislauf ausgebildeten Sekundärkreislauf, in dem eine zu kühlende Batterie und ein zu kühlender Gleichstrom/Gleichstrom-Wandler angeordnet sind, aufweist. Der Primärkreislauf weist einen über eine Schalteinrichtung gesteuerten Verdichter auf. Der Sekundärkreislauf ist mit dem Primärkreislauf thermodynamisch gekoppelt und enthält zumindest ein auf ein Signal der Schalteinrichtung des Primärkreislaufes ansprechendes Bauteil. Die Schalteinheit kann ebenfalls auf ein Bauteil des Sekundärkühlkreislaufs ansprechen und somit beispielsweise den Kühlmittelfluss im Sekundärkreislauf beeinflussen und damit die Kühlleistung beeinflussen.

Das Dokument FR 2 884 058 A1 offenbart eine Vorrichtung zur Kühlung einer Batterie mit einer Klimaanlage mit einem, einen Verdampfer aufweisenden Kältekreislauf. Ferner ist ein Wärmetauscher gezeigt, der zwischen dem Kältekreislauf und einem Kühlmittelkreislauf angeordnet ist, in dem die Batterie angeordnet ist.

Das Dokument US 2006/0137853 A1 offenbart eine Klimaanlage mit einem ersten Kreislauf und einem zweiten Kreislauf sowie einem Wärmekreislauf. Im ersten Kreislauf (Kältekreis) sind ein Haupt-Verdampfer und ein Hilfs-Verdampfer angeordnet. Der Haupt-Verdampfer ist in Luftstrom-Kanälen angeordnet, die in unterschiedlichen Zonen der Fahrzeugkabine, die zu Kühlen oder zu Heizen ist, enden. Dem Hilfs-Verdampfer nachgeschaltet ist ein Wärmetauscher angeordnet.

Die Aufgabe der vorliegenden Erfindung besteht deshalb darin, ein System für ein Kraftfahrzeug zum Erwärmen und/oder Kühlen einer Batterie und eines Kraftfahrzeuginnenraumes und ein Verfahren zur Verfügung zu stellen, bei dem die Abwärme der Batterie mit einem geringen technischen Aufwand zum Erwärmen des Kraftfahrzeuginnenraumes genutzt werden kann. Auch ist es die Aufgabe eine entsprechende Kraftfahrzeugklimaanlage zur Verfügung zu stellen.

Diese Aufgabe zum System wird gelöst mit den Merkmalen von Anspruch 1. Die Aufgabe zu dem Verfahren wird gelöst mit den Merkmalen von Anspruch 10. Die Aufgabe zu der Kraftfahrzeugklimaanlage wird gelöst mit den Merkmalen von Anspruch 13.

Die von der Batterie abgegebene Abwärme kann dadurch entweder an die Umgebungsluft oder an den Kraftfahrzeuginnenraum abgegeben werden, indem mittels des wenigstens einen Mittels die Abwärme von dem Verdampfer-Wärmeübertrager an die Umgebungsluft oder an dem Kraftfahrzeuginnenraum zuzuführende Luft abgegeben werden kann. Damit ist es möglich, dass die Abwärme der Batterie zum Erwärmen des Kraftfahrzeuginnenraumes genutzt werden kann. Die Ausnutzung der Abwärme der Batterie zum Erwärmen des Kraftfahrzeuginnenraumes kann auch ergänzend dadurch ausgeführt werden, dass mittels des wenigstens einen Mittels, das zusätzlich auch an dem vorzugsweise vorhandenen Umgebungsluft-Wärmeübertrager vorhanden ist, die dem Kraftfahrzeuginnenraum zuzuführende Luft vor der Zuführung in den Kraftfahrzeuginnenraum an den Umgebungsluft-Wärmeübertrager erwärmt wird.

Insbesondere umfasst das wenigstens eine Mittel ein Gebläse und/oder ein Gehäuse mit einer Luftein- und Luftauslassöffnung und/oder wenigstens eine Luftleiteinrichtung, insbesondere wenigstens eine Luftklappe, und/oder wenigstens einen Luftkanal.

Zweckmäßig ist der Verdampfer-Wärmeübertrager und/oder vorzugsweise der Umgebungsluft-Wärmeübertrager von dem Gehäuse umgeben, so dass die dem Kraftfahrzeuginnenraum zuzuführende Luft zunächst durch den von dem Gehäuse eingeschlossenen Raum, in dem sich der Verdampfer-Wärmeübertrager befindet, durchgeleitet wird und sich dadurch die Luft an dem Verdampfer-Wärmeübertrager erwärmen kann.

In einer weiteren Ausgestaltung ist der Verdampfer-Wärmeübertrager in Scheibenbauweise ausgebildet.

In einer ergänzenden Ausführungsform ist der Verdampfer-Wärmeübertrager als ein in dieser Schutzrechtsanmeldung beschriebener Wärmeübertrager ausgebildet.

Vorzugsweise ist bezüglich des Wärmeübertragers das erste Fluid Kältemittel des Kältekreises, das zweite Fluid das Kühlmittel des Kühlmittelkreislaufes und das dritte Fluid Luft, insbesondere dem Kraftfahrzeuginnenraum zuzuführende Luft oder in die Umgebungsluft geleitete Luft. Der Verdampfer-Wärmeübertrager ist in Scheibenbauweise ausgebildet. Damit weist der Verdampfer-Wärmeübertrager einen ersten Fluidkanal zum Durchleiten des Kältemittels und einen zweiten Fluidkanal zum Durchleiten des Kühlmittels des Kühlmittelkreislaufes auf. Soll die Batterie mittels des Kältekreises gekühlt werden, wird ein Ventil an dem Kältekreis geöffnet, so dass durch den Verdampfer-Wärmeübertrager das Kältemittel strömt und dabei das Kältemittel Wärme von dem Kühlmittel des Kältekreises aufnimmt. Bei einem abgeschalteten Kältekreis kann zusätzlich die Batterie gekühlt werden und optional der Kraftfahrzeuginnenraum erwärmt werden, indem zu dem Wärmeübertrager Luft geleitet wird, diese Luft an dem Wärmeübertrager erwärmt wird und anschließend in die Umgebungsluft oder in den Kraftfahrzeuginnenraum geleitet wird. Bei einem abgeschalteten Kältekreis, d. h. dass kein Kältemittel durch den ersten Fluidkanal strömt, kann somit Wärme von dem Kühlmittel in dem zweiten Fluidkanal auf ein drittes Fluid, nämlich Luft, insbesondere dem Kraftfahrzeuginnenraum zuzuführende Luft, übertragen werden.

In einer Variante ist die dem Kraftfahrzeuginnenraum zuzuführende Luft an dem Verdampfer-Wärmeübertrager, insbesondere Wärmeübertrager, erwärmbar.

Wärmeübertrager in Scheibenbauweise, umfassend eine Vielzahl von übereinander gestapelten Scheiben, so dass zwischen den Scheiben ein erster Fluidkanal für ein erstes Fluid und ein zweiter Fluidkanal für ein zweites Fluid ausgebildet ist, eine Ein- und Auslassöffnung für das erste Fluid und eine Ein- und Auslassöffnung für das zweite Fluid, wobei der Wärmeübertrager mit Wellrippen versehen ist zur außenseitigen Temperierung, d. h. Erwärmen und/oder Kühlen, eines dritten Fluides an dem Wärmeübertrager und/oder der Wärmeübertrager mit Öffnungen, vorzugsweise Schlitzen, versehen ist zum Durchleiten und Temperieren des dritten Fluides und/oder der Wärmeübertrager mit einem dritten Fluidkanal zum Durchleiten des dritten Fluides, insbesondere Luft, durch den Wärmeübertrager versehen ist. Der Wärmeübertrager kann damit in vorteilhafter Weise nicht nur dazu benutzt werden, um Wärme von dem ersten Fluid auf das zweite Fluid und umgekehrt zu übertragen, sondern auch dazu Wärme von dem ersten Fluid und/oder dem zweiten Fluid an ein drittes Fluid zu übertragen und umgekehrt. Dies ist möglich, weil der Wärmeübertrager entweder außenseitig mit entsprechenden Wellrippen versehen ist oder zusätzlich Öffnungen aufweist, so dass die Wärme auch außenseitig an den Wärmeübertrager in ausreichendem Umfang auf das dritte Fluid übertragen werden kann.

Zweckmäßig sind die Wellrippen außenseitig an einem Block aus übereinander gestapelten Scheiben angeordnet und/oder die Wellrippen sind zwischen den Scheiben angeordnet.

In einer weiteren Ausführungsform sind die Scheiben als ebene Platten ausgebildet.

Erfindungsgemäßes Verfahren zum Kühlen und/oder Erwärmen einer Batterie eines Kraftfahrzeuges und/oder eines Kraftfahrzeuginnenraumes mit einem Kältekreis mit einem Kondensator, einem Verdichter, einem ersten Verdampfer und einem zweiten Verdampfer und mit einem Kühlmittelkreislauf, der thermisch mit der Batterie gekoppelt ist, indem zum Kühlen der Batterie Wärme von der Batterie mittels des Kühlmittelkreislaufes zu dem zweiten Verdampfer mittels eines Verdampfer-Wärmeübertragers übertragen wird und zum Kühlen des Kraftfahrzeuginnenraumes Luft an dem ersten Verdampfer gekühlt wird, und vorzugsweise mittels eines Umgebungsluft-Wärmeübertragers Wärme von dem Kühlmittelkreislauf an die Umgebungsluft abgeführt wird zum Kühlen der Batterie, insbesondere mittels eines in dieser Schutzrechtsanmeldung beschriebenen Systems, wobei an dem Verdampfer-Wärmeübertrager Luft erwärmt wird, insbesondere bei einem ausgeschalteten Kältekreis, und die erwärmte Luft dem Kraftfahrzeuginnenraum und/oder der Umgebungsluft zugeführt wird, indem die Luft mittels eines an dem Verdampfer-Wärmetauscher angeordneten zweiten Gebläses an dem Verdampfer-Wärmeübertrager vorbei- und/oder durchgeleitet wird.

Insbesondere wird Luft an dem Verdampfer-Wärmeübertrager vorbei- und/oder durchgeleitet.

In einer weiteren Ausgestaltung wird die Luft nach dem Erwärmen an dem Verdampfer-Wärmeübertrager dem Kraftfahrzeuginnenraum zugeführt und/oder wird in die Umgebungsluft des Kraftfahrzeuges geleitet.

In einer ergänzenden Variante wird die Luft von einem Gebläse oder mittels Konvention an dem Verdampfer-Wärmeübertrager vorbei- und/oder durchgeleitet

In einer weiteren Variante wird die an dem Verdampfer-Wärmeübertrager erwärmte Luft vor, nach oder während des Vorbeifeitens an dem Verdampfer-Wärmeübertrager von einer elektrischen Heizeinrichtung, insbesondere PTC-Heizeinrichtung, erwärmt.

Eine erfindungsgemäße Kraftfahrzeugklimaanlage umfasst ein in dieser Schutzrechtsanmeldung beschriebenes System und/oder die Kraftfahrzeugklimaanlage umfasst einen in dieser Schutzrechtsanmeldung beschriebenen Wärmeübertrager und/oder von der Kraftfahrzeugklimaanlage ist ein in dieser Schutzrechtsanmeldung beschriebenes Verfahren ausführbar.

Im Nachfolgenden werden Ausführungsbeispiele der Erfindung unter Bezugnahme auf die beigefügten Zeichnungen näher beschrieben. Es zeigt:
- Fig. 1: eine stark schematisierte Darstellung eines Systems in einem ersten Ausführungsbeispiel für ein Kraftfahrzeug zum Erwärmen und/oder Kühlen einer Batterie und eines Kraftfahrzeuginnenraumes,
- Fig. 2: eine stark schematisierte Darstellung des Systems in einem nicht erfindungsgemäßen Beispiel für ein Kraftfahrzeug zum Erwärmen und/oder Kühlen der Batterie und des Kraftfahrzeuginnenraumes,
- Fig. 3: eine perspektivische Ansicht eines Wärmeübertragers in einem ersten Ausführungsbeispiel,
- Fig. 4: eine Vorderansicht des Wärmeübertragers gemäß Fig. 3,
- Fig. 5: eine perspektivische Ansicht des Wärmeübertragers in einem zweiten Ausführungsbeispiel,
- Fig. 6: eine perspektivische Ansicht des Wärmeübertragers in einem dritten Ausführungsbeispiel,
- Fig. 7: eine Schnittdarstellung des Wärmeübertragers gemäß Fig. 6,
- Fig. 8: eine perspektivische Ansicht des Wärmeübertragers in einem vierten Ausführungsbeispiel,
- Fig. 9: eine Schnittdarstellung des Wärmeübertragers in einem fünften Ausführungsbeispiel,
- Fig. 10: eine Schnittdarstellung des Wärmeübertragers in einem sechsten Ausführungsbeispiel und
- Fig. 11: eine vereinfachte Darstellung des Wärmeübertragers gemäß Fig. 3 bis 5, 8 und 10 in einem Gehäuse.

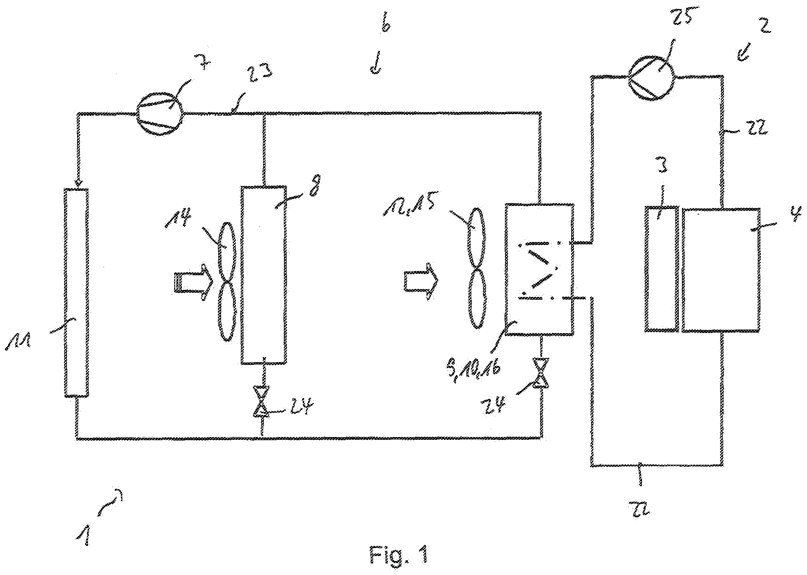

In Fig. 1 ist ein System 1 für ein Kraftfahrzeug zum Erwärmen und Kühlen einer Batterie 3 und eines Kraftfahrzeuginnenraumes dargestellt. Die Batterie 3 dient dabei zum Antrieb des Kraftfahrzeuges als Traktionsbatterie. Das System 1 weist einen Kühlmittelkreislauf 2 mit Leitungen 22 auf, durch die als Kühlmittel Wasser mit einem Frostschutzmittel mittels einer Umwälzpumpe 25 umgewälzt wird. Der erste Kühlmittelkreislauf 2 ist dabei thermisch mit einem Batterie-Wärmeübertrager 4 mit der Batterie 3 gekoppelt. Zum Kühlen oder Erwärmen der Batterie 3 wird um die Batterie 3 Luft umgewälzt, welche an dem Batterie-Wärmeübertrager 4 erwärmt oder abgekühlt wird.

Das System 1 umfasst ferner einen Kältekreis 6 mit einem Verdichter 7, einem Kondensator 11, einem ersten Verdampfer 8 und einem zweiten Verdampfer 9. Durch den Kältekreis 6 strömt Kältemittel durch Leitungen 23 des Kältekreises 6. An dem ersten Verdampfer 8 ist ein erstes Gebläse 14 angeordnet. Mittels des ersten Gebläses 14 kann Luft aus der Umgebung oder aus dem Kraftfahrzeuginnenraum im Umluftbetrieb zu dem ersten Verdampfer 8 geleitet werden, so dass bei dem Kältekreis 6 in Betrieb die Luft an dem ersten Verdampfer 8 gekühlt wird und anschließend diese gekühlte Luft dem Kraftfahrzeuginnenraum (nicht dargestellt) zugeleitet wird. Die der Luft an dem ersten Verdampfer 8 entzogene Wärme wird dabei an dem Kondensator 11 an die Umgebung des Kraftfahrzeuges abgegeben. In dem Kältekreis 6 sind ferner zwei Ventile 24 angeordnet. Mittels der Ventile 24 kann gesteuert werden, ob das Kältemittel nur durch den ersten Verdampfer 8, nur den zweiten Verdampfer 9 oder durch beide Verdampfer 8, 9 strömt und dadurch an dem ersten und/oder zweiten Verdampfer 8, 9 ein Fluid gekühlt werden kann. Der zweite Verdampfer 9 stellt einen Verdampfer-Wärmeübertrager 10 dar und ist dahingehend ausgebildet, dass mittels des Verdampfer-Wärmeübertragers 10 Wärme von dem Kühlmittel in dem Kühlmittelkreislauf 2 an das Kältemittel des Kältekreises 6 übertragen werden kann. Dadurch ist es möglich, dass von dem Kältekreis 6 mittels des zweiten Verdampfers 9 bzw. des Verdampfer-Wärmeübertragers 10 die Batterie 3 gekühlt werden kann. Bei hohen Außentemperaturen im Sommer ist eine ausreichende Kühlung der Batterie 3 zu gewährleisten. Hierzu wird der Kältekreis 6 in Betrieb genommen und mittels des Kältekreises 6 und dem Verdampfer-Wärmeübertrager 10 bei einem geöffneten Ventil 24 an dem Verdampfer-Wärmeübertrager 10 kann die Batterie 3 gekühlt werden. Der Verdampfer-Wärmeübertrager 10 stellt somit auch einen Chiller dar.

An dem Verdampfer-Wärmeübertrager 10 ist außerdem ein zweites Gebläse 15 angeordnet. Mittels des zweiten Gebläses 15 kann Luft zu dem Verdampfer-Wärmeübertrager 10 geleitet werden und diese Luft wird anschließend dem Kraftfahrzeuginnenraum zugeführt. Bei niedrigen Außentemperaturen im Winter, beispielsweise bei Außentemperaturen von 0° C, ist für eine Kühlung der Batterie 3 ein Betrieb des Kältekreises 6 nicht erforderlich, weil die Außentemperaturen der Luft wesentlich geringer sind als die Solltemperatur der Batterie 3. Zum Kühlen der Batterie 3 kann somit die Energie zum Betrieb des Verdichters 7 eingespart werden. Der Verdampfer-Wärmeübertrager 10 weist außenseitig eine ausreichend große Oberfläche auf, dass aufgrund des Vorbeileitens von Luft an dem Verdampfer-Wärmeübertrager 10 auch in einem ausreichenden Umfang die Wärme aus dem Kühlmittel des Kühlmittelkreislaufes 2 an die an die Umgebung angesaugte Luft abgegeben werden kann und anschließend dem Kraftfahrzeuginnenraum zugeführt wird.

Das System 1 erfordert damit in vorteilhafter Weise keinen zusätzlichen Umgebungsluft-Wärmeübertrager 29, der lediglich dazu dient, bei niedrigen Außentemperaturen die Wärme aus dem Kühlmittelkreislauf 2 an die Umgebung abzugeben. In vorteilhafter Weise kann der Verdampfer-Wärmeübertrager 10 hierfür genützt werden. Aufgrund der an dem Verdampfer-Wärmeübertrager 10 als Chiller vorbeigeleiteten Luft und dem anschließenden Einleiten in den Innenraum des Kraftfahrzeuges kann die Abwärme der Batterie 3 außerdem zusätzlich zum Erwärmen des Kraftfahrzeuginnenraumes genutzt werden, so dass in vorteilhafter Weise besonders bei Hybrid- oder Elektrofahrzeugen (nicht dargestellt) Energie zum Erwärmen des Kraftfahrzeuginnenraumes eingespart werden kann. Besteht kein Bedarf zum Erwärmen des Kraftfahrzeuginnenraumes und sind die Temperaturen in der Umgebung des Kraftfahrzeuges ausreichend niedrig um die Batterie 3 zu kühlen, kann mittels einer Luftleiteinrichtung (nicht dargestellt), z. B. einer Luftklappe, die an dem Verdampfer-Wärmeübertrager 10 vorbeigeleitete Luft nicht in den Kraftfahrzeuginnenraum, sondern an die Umgebung des Kraftfahrzeuges abgeleitet werden. Damit ist es auch möglich, die Batterie 3 zu kühlen mittels Umgebungsluft ohne dass der Kraftfahrzeuginnenraum erwärmt wird.

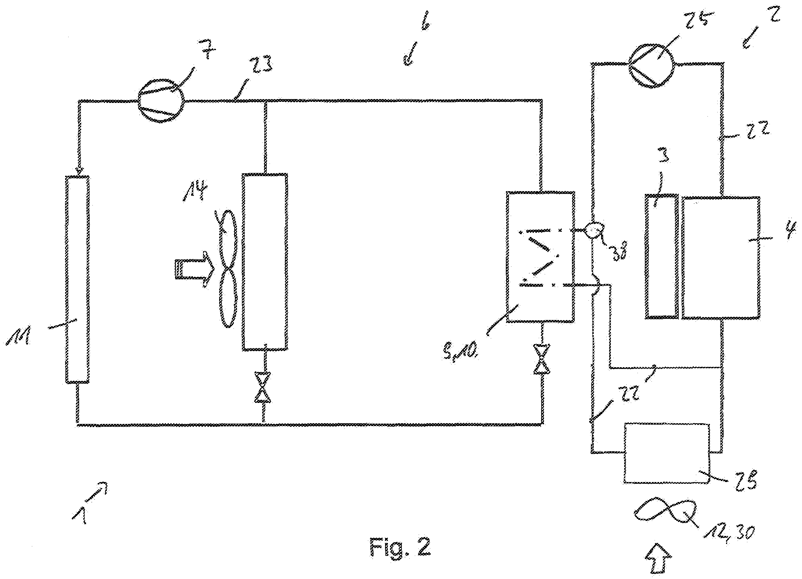

In einem weiteren in Fig. 2 dargestellten nicht erfindungsgemäßen Beispiel verfügt das System 1 an dem Kühlmittelkreislauf 2 neben dem Verdampfer-Wärmeübertrager 10 über einen zusätzlichen Umgebungsluft-Wärmeübertrager 29, der von dem Kühlmittel des Kühlmittelkreislaufes 2 durchströmt ist und durch den Luft mittels eines zusätzlichen Gebläses 30 geleitet wird. Die Übertragung der Abwärme aus der Batterie 3 bei einem eingeschalteten Kältekreis 6 im Sommer wird somit mittels des Verdampfer-Wärmeübertragers 10 ausgeführt und die Übertragung bei niedrigen Außentemperaturen bei einem ausgeschalteten Kältekreis 6 wird mittels des zusätzlichen Umgebungsluft-Wärmeübertragers 29 ausgeführt. Ein 3-WegeVentil 38 steuert, ob das Kühlmittel nur durch den Verdampfer-Wärmeübertrager 10, nur durch den Umgebungsluft-Wärmeübertrager 29 oder durch den Verdampfer-Wärmeübertrager 10 und den Umgebungsluft-Wärmeübertrager 29 strömt. Ansonsten entspricht dieses Ausführungsbeispiel im Wesentlichen dem ersten Ausführungsbeispiel gemäß Fig. 1.

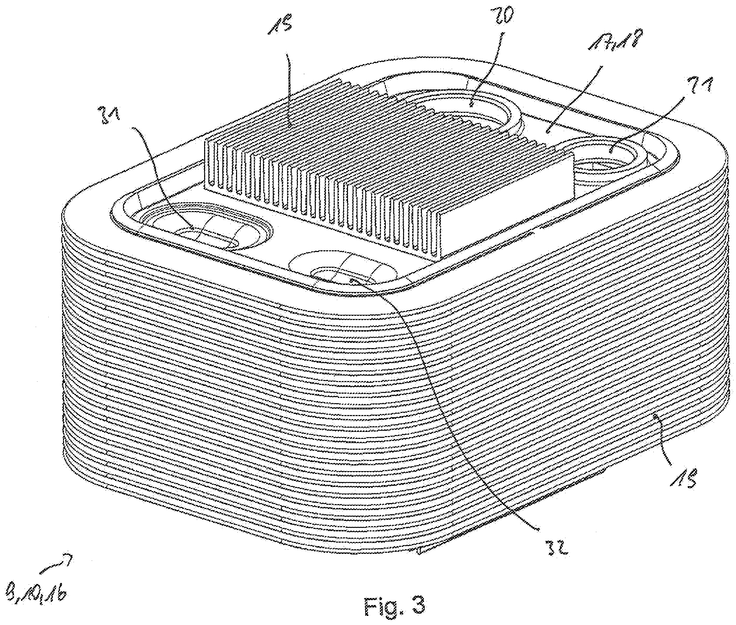

In den Fig. 3 bis 10 sind Ausführungsbeispiele des Wärmeübertragers 16 dargestellt. Der Wärmeübertrager 16 entspricht dabei dem Verdampfer-Wärmeübertrager 10 des Systems 1 gemäß Fig. 1.

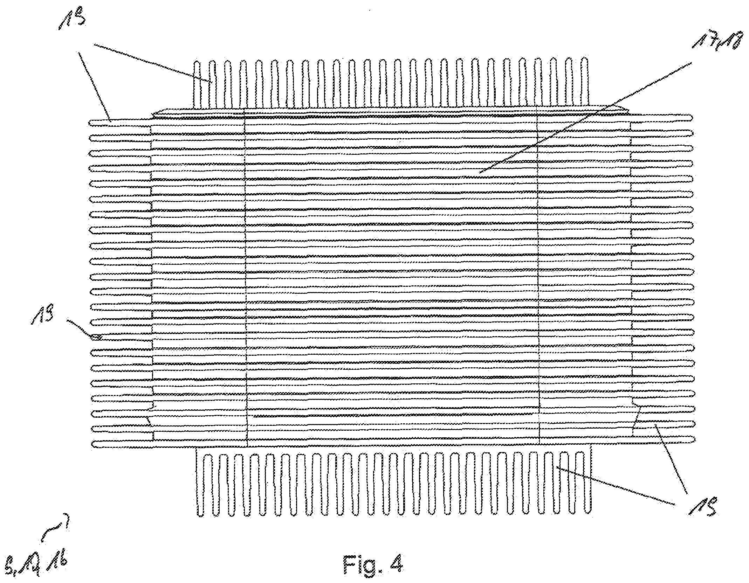

Der in Fig. 3 und 4 dargestellte Wärmeübertrager 16 in einem ersten Ausführungsbeispiel weist eine Vielzahl von übereinander angeordneten Scheiben 17 auf, so dass diese einen Block 18 bilden. Zwischen den Scheiben 17 bildet sich dabei ein erster Fluidkanal 35 zum Durchleiten von Kältemittel des Kältekreises 6 und ein zweiter Fluidkanal 36 zum Durchleiten des Kühlmittels des Kühlmittelkreislaufes 2. Damit kann die Wärme von dem Kühlmittel des Kühlmittelkreislaufes 2 auf das Kältemittel des Kältekreises 6 übertragen werden und damit im Sommerbetrieb die Batterie 3 gekühlt werden. Der in Fig. 3 und 4 dargestellte Wärmeübertrager 16 weist dabei außenseitig an dem Block 18 mit den Scheiben 17 Wellrippen 19 auf, so dass dadurch die außenseitige Oberfläche des Wärmeübertragers 16 vergrößert wird und die an den Wärmeübertrager 16 mittels des zweiten Gebläses 15 vorbeigeleitete Luft bei niedrigen Temperaturen im Winter Wärme in einem ausreichend großen Umfang aus dem Kühlmittel des Kühlmittelkreislaufes 2 aufnehmen kann. Durch eine Einlassöffnung 20 wird Kühlmittel in den Wärmeübertrager 16 eingeleitet und aus einer Auslassöffnung 21 wird das Kühlmittel ausgeleitet. Durch eine Einlassöffnung 31 wird Kältemittel in den Wärmeübertrager 16 eingeleitet und aus einer Auslassöffnung 32 wird das Kältemittel ausgeleitet

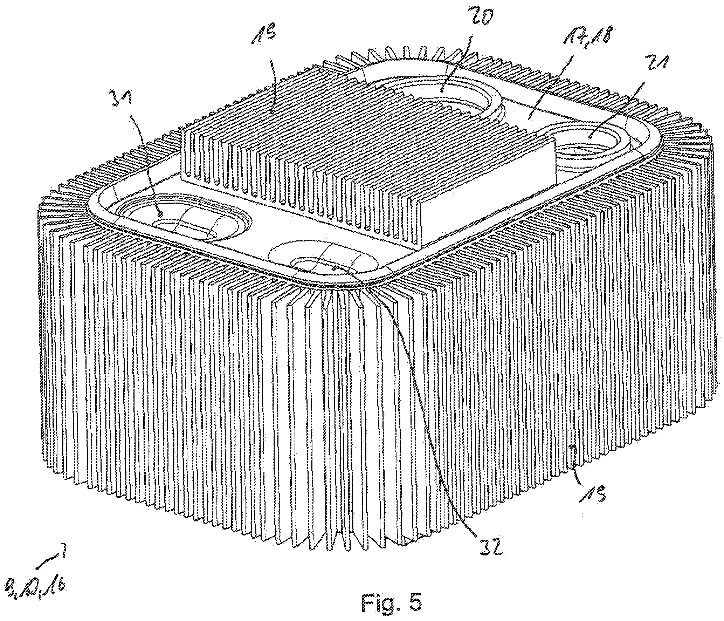

Das in Fig. 5 dargestellte zweite Ausführungsbeispiel des Wärmeübertragers 16 unterscheidet sich von dem ersten Ausführungsbeispiel lediglich durch die andere Ausrichtung der seitlich angeordneten VVellrippen 19.

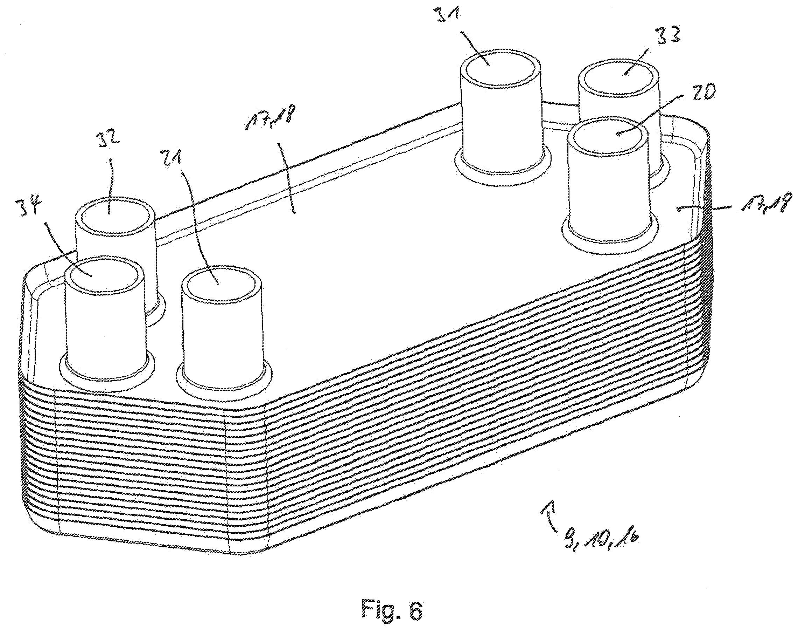

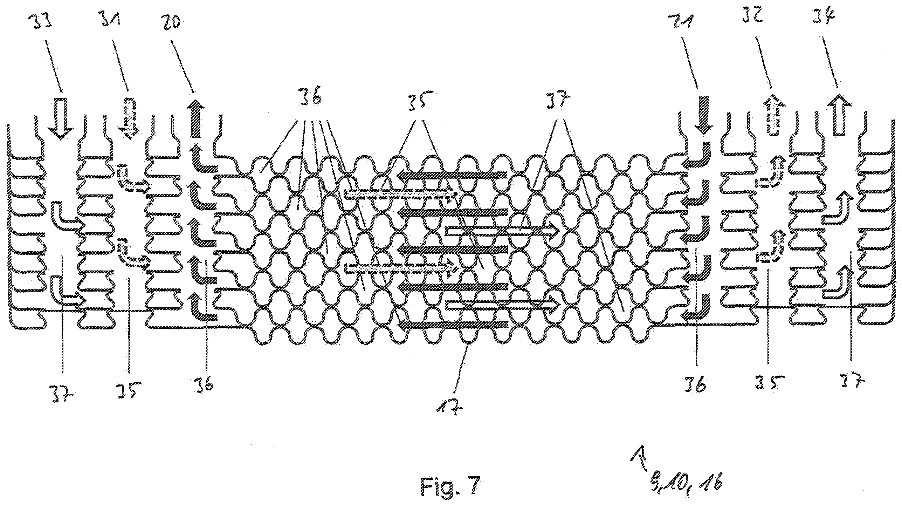

In Fig. 6 ist ein drittes Ausführungsbeispiel des Wärmeübertragers 16 dargestellt. Eine Vielzahl von Scheiben 17 sind zu dem Block 18 übereinander angeordnet, so dass sich zwischen den Scheiben ein erster Fluidkanal 35 zum Durchleiten von Kältemittel des Kältekreises 6, ein zweiter Fluidkanal 36 zum Durchleiten des Kühlmittels des Kühlmittelkreislaufes 2 und ein dritter Fluidkanal 37 zum Durchleiten von Luft ausbildet (Fig. 7). Die Strömungsführung ist in Fig. 7 dargestellt. Damit kann die Wärme von dem Kühlmittel des Kühlmittelkreislaufes 2 auf das Kältemittel des Kältekreises 6 übertragen werden und damit im Sommerbetrieb die Batterie 3 gekühlt werden und im Winter die Wärme von dem Kühlmittel auf die Luft Übertragen werden, Durch die Einlassöffnung 20 wird Kühlmittel in den Wärmeübertrager 16 eingeleitet und aus der Auslassöffnung 21 wird das Kühlmittel ausgeleitet. Durch die Einlassöffnung 31 wird Kältemittel in den Wärmeübertrager 16 eingeleitet und aus der Auslassöffnung 32 wird das Kältemittel ausgeleitet (Sommer) oder durch eine Einlassöffnung 33 wird Luft in den Wärmeübertrager 16 eingeleitet und aus einer Auslassöffnung 34 wird Luft ausgeleitet (Winter). Anstelle des Vorbeileitens der Luft wie in dem ersten Ausführungsbeispiel wird somit im dritten Ausführungsbeispiel die Luft durch den Wärmeübertrager 16 geleitet.

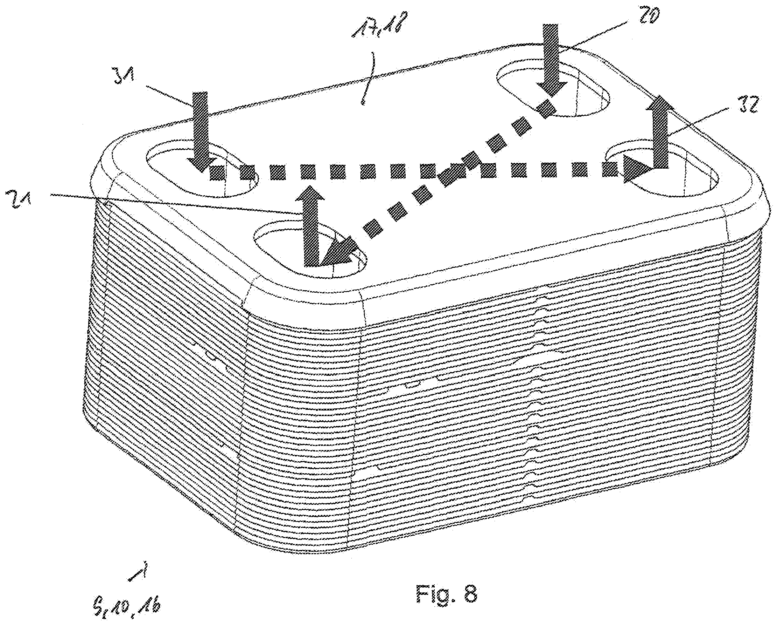

In Fig. 8 ist ein viertes Ausführungsbeispiel des Wärmeübertragers 16 dargestellt, dessen Wellrippen 19 nicht abgebildet sind. Die Ein- und Auslassöffnung 20, 21 für das Kühlmittel und die Ein- und Auslassöffnung 31, 32 für das Kältemittel sind dabei diagonal angeordnet, so dass das Kühlmittel und das Kältemittel diagonal den Wärmeübertrager 16 in dem ersten und zweiten Fluidkanal 35, 36 durchströmt.

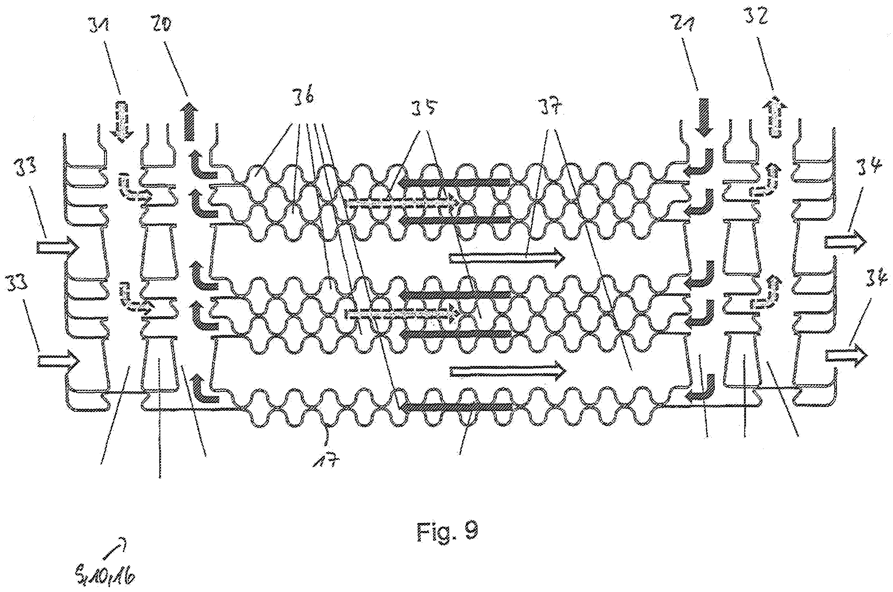

In Fig. 9 ist eine Schnittdarstellung des Wärmeübertragers 16 in einem fünften Ausführungsbeispiel dargestellt Die Ein- und Auslassöffnung 20, 21 für das Kühlmittel und die Ein- und Auslassöffnung 31, 32 für das Kältemittel sind obenseitig angeordnet und der erste und zweite Fluidkanal 35, 36 bildet sich jeweils zwischen den Scheiben 17 aus. Zwischen mehreren Scheiben 17 ist der dritte Fluidkanal 37 für die Luft ausgebildet und die Luft strömt seitlich durch Einlassöffnungen 33 für die Luft ein und strömt seitlich durch Auslassöffnungen 34 aus.

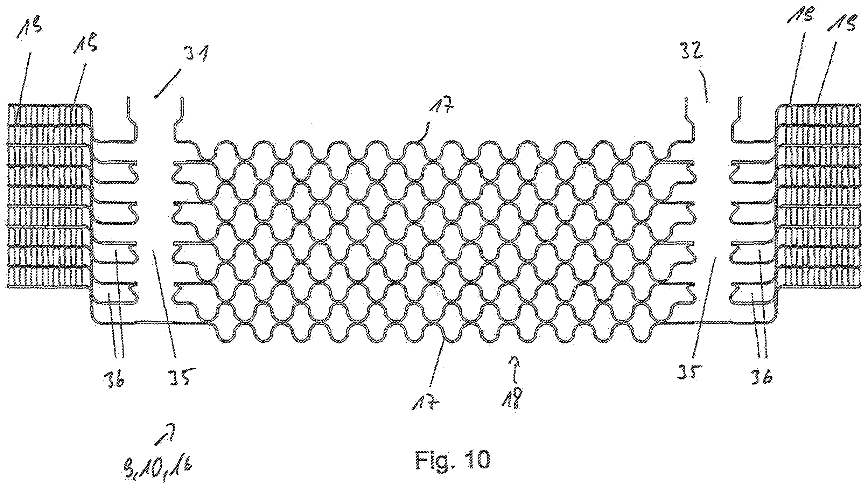

In Fig. 10 ist eine Schnittdarstellung des Wärmeübertragers 16 in einem sechsten Ausführungsbeispiel dargestellt. Die Ein- und Auslassöffnung 31, 32 für das Kältemittel ist obenseitig ausgebildet; dies gilt auch für die nicht dargestellte Ein- und Auslassöffnung 20, 21 für das Kühlmittel. Seitlich an dem von den zu einem Block 18 übereinander angeordneten Scheiben 17 sind Wellrippen 19 vorhanden. Zur Kühlung des Kühlmittels wird somit der Wärmeübertrager 16 außenseitig von Luft umströmt und mittels der Wellrippen 19 die Wärme von dem Kühlmittel an die Luft übertragen (Winter), sofern das Kühlmittel nicht von dem Kältemittel gekühlt wird.

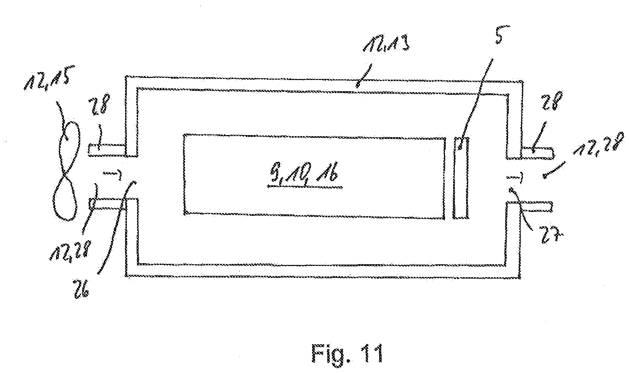

Der in den Fig. 3 bis 5, 8 und 10 dargestellte Verdampfer-Wärmeübertrager 10 als Wärmeübertrager 16 in Scheibenbauweise ist vorzugsweise innerhalb eines Gehäuses 13 angeordnet (Fig. 11). Das Gehäuse 13 weist dabei eine Lufteinlassöffnung 26 und eine Luftauslassöffnung 27 auf, die jeweils in einen Luftkanal 28 münden. Im Bereich der Lufteinlassäffnung 26 ist das zweite Gebläse 15 als Mittel 12 zur Übertragung von Wärme von dem Wärmeübertrager 16 bzw. Verdampfer-Wärmeübertrager 10 an dem Kraftfahrzeuginnenraum zuzuführende Luft angeordnet. Innerhalb des Gehäuses 13 ist neben dem Verdampfer-Wärmeübertrager 10 eine elektrische Heizeinrichtung 5 angeordnet. Reicht die Abwärme aus der Batterie 3 zum Erwärmen des Kraftfahrzeuginnenraumes auf die gewünschte Solltemperatur nicht aus, kann mittels der elektrischen Heizeinrichtung 5 die Luft zusätzlich erwärmt werden.

Insgesamt betrachtet sind mit dem erfindungsgemäßen System 1 und dem erfindungsgemäßen Verfahren wesentliche Vorteile verbunden. Der WärmeÜbertrager 16 bzw. Verdampfer-Wärmeübertrager 10 als Chiller ist dabei aufgrund der Anordnung von Wellrippen 19 dahingehend ausgebildet, dass dieser außenseitig eine ausreichend große Oberfläche aufweist, so dass die Wärme von dem Kühlmittelkreislauf 2 nicht nur auf das Kältemittel des Kältekreises 6 im Sommerbetrieb abgegeben werden kann, sondern auch in einem ausreichenden Umfang an die an dem Wärmeübertrager 18 mittels des zweiten Gebläses 15 vorbeigeleitete Luft. Damit kann der zusätzliche Umgebungsluft-Wärmeübertrager 29 eingespart werden und außerdem aufgrund der Nutzung der Abwärme der Batterie 3 zum Erwärmen des Kraftfahrzeuginnenraumes auch elektrische Energie bzw. Energie zum Erwärmen des Kraftfahrzeuginnenraumes eingespart werden. Dies ist insbesondere bei Hybrid- oder Elektrofahrzeugen von Vorteil, weil die Batterien 3 des Hybrid- oder Elektrofahrzeuges ein geringes Energiespeiebervermögen aufweisen.

## Patentansprüche

1. System (1) für ein Kraftfahrzeug zum Erwärmen und/oder Kühlen einer Batterie (3) und eines Kraftfahrzeuginnenraumes, umfassend einen Kühlmittelkreislauf (2), der thermisch, insbesondere mit einem Batterie-Wärmeübertrager (4), mit der Batterie (3) gekoppelt ist, einen Kältekreis (6) mit einem Kondensator (11), einem Verdichter (7), einem ersten Verdampfer (8) zum Kühlen des Kraftfahrzeuginnenraumes und einem zweiten Verdampfer (9) zum Kühlen der Batterie (3), indem der zweite Verdampfer (9) mit einem Verdampfer-Wärmeübertrager (10) mit dem Kühlmittelkreislauf (2) thermisch gekoppelt ist, wobei an dem ersten Verdampfer (8) ein erstes Gebläse (14) angeordnet ist, **dadurch gekennzeichnet, dass** der Verdampfer-Wärmeübertrager (10) mit wenigstens einem Mittel (12) zur Übertragung von Wärme von dem Verdampfer-Wärmeübertrager (10) an die Umgebungsluft und/oder den Kraftfahrzeuginnenraum versehen ist, wobei das wenigstens eine Mittel (12) zur Übertragung von Wärme von dem Verdampfer-Wärmeübertrager (10) an die Umgebungsluft und/oder den Kraftfahrzeuginnenraum ein zweites Gebläse (15) ist, welches an dem Verdampfer-Wärmeübertrager (10) angeordnet ist.

2. System (1) nach Anspruch 1, **dadurch gekennzeichnet, dass** das wenigstens eine Mittel (12) weiterhin ein Gehäuse (13) mit einer Luftein- und Luftauslassöffnung (26, 27) und/oder wenigstens eine Luftleiteinrichtung, insbesondere wenigstens eine Luftklappe, und/oder wenigstens einen Luftkanal (28) umfasst.

3. System (1) nach Anspruch 2, **dadurch gekennzeichnet, dass** das Gehäuse (13) den Verdampfer-Wärmeübertrager (10) und/oder den Umgebungsluft-Wärmeübertrager (29) umgibt.

4. System (1) nach einem oder mehreren der vorhergehenden Ansprüche, **dadurch gekennzeichnet, dass** der Verdampfer-Wärmeübertrager (10) in Scheibenbauweise ausgebildet ist.

5. System (1) nach einem oder mehreren der vorhergehenden Ansprüche, **dadurch gekennzeichnet, dass** der Verdampfer-Wärmeübertrager (10) als ein Wärmeübertrager (16) in Scheibenbauweise ausgebildet ist, umfassend: eine Vielzahl von übereinander gestapelten Scheiben (17), so dass zwischen den Scheiben (17) ein erster Fluidkanal (35) für ein erstes Fluid und ein zweiter Fluidkanal (35) für ein zweites Fluid ausgebildet ist, eine Ein- und Auslassöffnung (31, 32) für das erste Fluid und eine Ein- und Auslassöffnung (20, 21) für das zweite Fluid, wobei der Wärmeübertrager (16) mit Wellrippen (19) versehen ist zur außenseitigen Temperierung eines dritten Fluides an dem Wärmeübertrager (16) und/oder der Wärmeübertrager (16) mit Öffnungen, vorzugsweise Schlitzen, versehen ist zum Durchleiten und Temperieren des dritten Fluides und/oder- der Wärmeübertrager (16) mit einem dritten Fluidkanal (37) zum Durchleiten des dritten Fluides, insbesondere Luft, versehen ist.

6. System (1) nach Anspruch 5, **dadurch gekennzeichnet, dass** die Wellrippen (19) außenseitig an einem Block (18) aus übereinander gestapelten Scheiben (17) angeordnet sind und/oder die Wellrippen (19) zwischen den Scheiben (17) angeordnet sind.

7. System (1) nach einem der Ansprüche 5 oder 6, **dadurch gekennzeichnet, dass** die Scheiben (17) als ebene Platten ausgebildet sind.

8. System (1) nach einem der vorhergehenden Ansprüche, **dadurch gekennzeichnet, dass** bezüglich des Wärmeübertragers (16) das erste Fluid Kältemittel des Kältekreises (6), das zweite Fluid das Kühlmittel des Kühlmittelkreislaufes (2) ist und das dritte Fluid Luft, insbesondere dem Kraftfahrzeuginnenraum zuzuführende Luft, ist.

9. System (1) nach einem oder mehreren der vorhergehenden Ansprüche 6 bis 8, **dadurch gekennzeichnet, dass** die dem Kraftfahrzeuginnenraum zuzuführende Luft an dem Verdampfer-Wärmeübertrager (10), insbesondere Wärmeübertrager (16), erwärmbar ist.

10. Verfahren zum Kühlen und/oder Erwärmen einer Batterie (3) eines Kraftfahrzeuges und eines Kraftfahrzeuginnenraumes mit einem Kältekreis (6) mit einem Kondensator (11), einem Verdichter (7), einem ersten Verdampfer (8) und einem zweiten Verdampfer (9) und mit einem Kühlmittelkreislauf (2), der thermisch mit der Batterie (3) gekoppelt ist, indem zum Kühlen der Batterie (3) Wärme von der Batterie (3) mittels des Kühlmittelkreislaufes (2) zu dem zweiten Verdampfer (9) mittels eines Verdampfer-Wärmeübertragers (10) übertragen wird und zum Kühlen des Kraftfahrzeuginnenraumes Luft an dem ersten Verdampfer (8) gekühlt wird, wobei an dem ersten Verdampfer (8) ein erstes Gebläse (14) angeordnet ist, **dadurch gekennzeichnet, dass** an dem Verdampfer-Wärmeübertrager (10) Luft erwärmt wird, insbesondere bei einem ausgeschalteten Kältekreis (6), und die erwärmte Luft dem Kraftfahrzeuginnenraum und/oder der Umgebungsluft zugeführt wird, indem die Luft mittels eines an dem Verdampfer-Wärmetauscher angeordneten zweiten Gebläses (15) an dem Verdampfer-Wärmeübertrager (10) vorbei- und/oder durchgeleitet wird, wobei insbesondere ein System (1) gemäß einem oder mehreren der vorhergehenden Ansprüche verwendet wird.

11. Verfahren nach Anspruch 10, **dadurch gekennzeichnet, dass** die Luft nach dem Erwärmen an dem Verdampfer-Wärmeübertrager (10) dem Kraftfahrzeuginnenraum zugeführt wird und/oder in die Umgebungsluft des Kraftfahrzeuges geleitet wird.

12. Verfahren nach einem oder mehreren der Ansprüche 10 oder 11, **dadurch gekennzeichnet, dass** die an dem Verdampfer-Wärmeübertrager (10) erwärmte Luft vor, nach oder während des Vorbeileitens an dem Verdampfer-Wärmeübertrager (10) von einer elektrischen Heizeinrichtung (5), insbesondere PTC-Heizeinrichtung, erwärmt wird.

13. Kraftfahrzeugklimaanlage, **dadurch gekennzeichnet, dass** die Kraftfahrzeugklimaanlage ein System (1) gemäß einem oder mehreren der Ansprüche 1 bis 9 umfasst.

## Claims

1. A system (1) for a motor vehicle for heating and/or cooling a battery (3) and a vehicle interior, comprising a coolant circuit (2), which is thermally coupled to the battery (3), particularly to a battery-heat exchanger (4), a refrigeration circuit (6) having a condenser (11), a compressor (7), a first evaporator (8) for cooling the vehicle interior, and a second evaporator (9) for cooling the battery (3), in that the second evaporator (9) with an evaporator-heat exchanger (10) is thermally coupled to the coolant circuit (2), wherein a first fan (14) is arranged on the first evaporator (8), **characterised in that** the evaporator-heat exchanger (10) is provided with at least one means (12) for transferring heat from the evaporator-heat exchanger (10) to the ambient air and/or the vehicle interior, wherein the at least one means (12) for transferring heat from the evaporator-heat exchanger (10) to the ambient air and/or the vehicle interior is a second fan (15) which is arranged on the evaporator-heat exchanger (10).

2. The system (1) according to claim 1, **characterised in that** the at least one means (12) further comprises a housing (13) with an air inlet or outlet opening (26, 27) and/or at least one air guiding device, particularly at least one air flap, and/or at least one air duct (28).

3. The system (1) according to claim 2, **characterised in that** the housing (13) surrounds the evaporator-heat exchanger (10) and/or the ambient air-heat exchanger (29) .

4. The system (1) according to one or more of the preceding claims, **characterised in that** the evaporator-heat exchanger (10) is designed with a disc construction.

5. The system (1) according to one or more of the preceding claims, **characterised in that** the evaporator-heat exchanger (10) is designed as a heat exchanger (16) with a disc construction, comprising: a plurality of discs (17) stacked one above the other, so that a first fluid channel (35) for a first fluid and a second fluid channel (35) for a second fluid are formed between the discs (17), an inlet and outlet opening (31, 32) for the first fluid, and an inlet and outlet opening (20, 21) for the second fluid, wherein the heat exchanger (16) is provided with corrugated fins (19) for external temperature control of a third fluid at the heat exchanger (16) and/or the heat exchanger (16) is provided with openings, preferably slots, for conducting and controlling the temperature of the third fluid and/or the heat exchanger (16) is provided with a third fluid channel (37) for conducting the third fluid, particularly air.

6. The system (1) according to claim 5, **characterised in that** the corrugated fins (19) are arranged on the outside on a block (18) of discs (17) stacked one above the other and/or the corrugated fins (19) are arranged between the discs (17).

7. The system (1) according to one of claims 5 or 6, **characterised in that** the discs (17) are designed as flat plates.

8. The system (1) according to one of the preceding claims, **characterised in that** in regard to the heat exchanger (16) the first fluid is refrigerant of the refrigeration circuit (6), the second fluid is the coolant of the coolant circuit (2), and the third fluid is air, particularly air to be supplied to the vehicle interior.

9. The system (1) according to one or more of the preceding claims 6 to 8, **characterised in that** the air to be supplied to the vehicle interior can be heated at the evaporator-heat exchanger (10), particularly the heat exchanger (16).

10. A method for cooling and/or heating a battery (3) of a motor vehicle and/or a vehicle interior with a refrigeration circuit (6) having a condenser (11), a compressor (7), a first evaporator (8), and a second evaporator (9) and having a coolant circuit (2), which is thermally coupled to the battery (3), in that to cool the battery (3), heat is transferred from the battery (3) by means of the coolant circuit (2) to the second evaporator (9) by means of an evaporator-heat exchanger (10) and to cool the vehicle interior, air is cooled at the first evaporator (8), wherein a first fan (14) is arranged on the first evaporator (8), **characterised in that** air is heated at the evaporator-heat exchanger (10), particularly when the refrigeration circuit (6) is turned off, and the heated air is supplied to the vehicle interior and/or the ambient air **in that** the air is passed over and/or through the evaporator-heat exchanger (10) by means of a second fan (15) arranged on the evaporator-heat exchanger, wherein in particular a system (1) according to one or more of the preceding claims is used.

11. The method according to claim 10, **characterised in that** the air after heating at the evaporator-heat exchanger (10) is supplied to the vehicle interior and/or conveyed to the ambient air of the motor vehicle.

12. The method according to one or more of claims 10 or 11, **characterised in that** the air heated at the evaporator-heat exchanger (10) is heated by an electric heater (5), particularly a PTC heater, before, after, or during its passing over the evaporator-heat exchanger (10).

13. A vehicle air-conditioning system, **characterised in that** the vehicle air-conditioning system comprises a system (1) according to one or more of claims 1 to 9.

## Revendications

1. Système (1) pour un véhicule automobile, destiné à chauffer et / ou à refroidir une batterie (3) et un habitacle d'un véhicule automobile, ledit véhicule automobile comprenant un circuit de liquide de refroidissement (2) qui est couplé thermiquement à la batterie (3), en particulier à un échangeur de chaleur (4) de la batterie, comprenant un circuit de fluide frigorigène (6) comportant un condenseur (11), un compresseur (7), un premier évaporateur (8) servant au refroidissement de l'habitacle du véhicule automobile et un deuxième évaporateur (9) servant au refroidissement de la batterie (3), tandis que le deuxième évaporateur (9) est couplé thermiquement, avec le circuit de liquide de refroidissement (2), à un échangeur de chaleur (10) de l'évaporateur, où un premier pulseur (14) est disposé au niveau du premier évaporateur (8), **caractérisé en ce que** l'échangeur de chaleur (10) de l'évaporateur est doté d'au moins un moyen (12) servant à la transmission de chaleur passant de l'échangeur de chaleur (10) de l'évaporateur, à l'air ambiant et / ou à l'habitacle du véhicule automobile, où le moyen (12) au moins au nombre de un servant à la transmission de chaleur passant de l'échangeur de chaleur (10) de l'évaporateur, à l'air ambiant et / ou à l'habitacle du véhicule automobile, est un deuxième pulseur (15) qui est disposé au niveau de l'échangeur de chaleur (10) de l'évaporateur.

2. Système (1) selon la revendication 1, **caractérisé en ce que** le moyen (12) au moins au nombre de un comprend en outre un carter (13) comportant une ouverture d'entrée d'air et de sortie d'air (26, 27) et / ou au moins un dispositif déflecteur d'air, en particulier au moins un volet d'air, et / ou au moins un conduit d'air (28).

3. Système (1) selon la revendication 2, **caractérisé en ce que** le carter (13) entoure l'échangeur de chaleur (10) de l'évaporateur et / ou l'échangeur de chaleur d'air ambiant (29).

4. Système (1) selon l'une quelconque ou plusieurs des revendications précédentes, **caractérisé en ce que** l'échangeur de chaleur (10) de l'évaporateur est conçu en étant du type à plaques.

5. Système (1) selon l'une quelconque ou plusieurs des revendications précédentes, **caractérisé en ce que** l'échangeur de chaleur (10) de l'évaporateur est conçu comme un échangeur de chaleur (16) du type à plaques et comprenant : une multiplicité de plaques (17) empilées les unes sur les autres, de sorte qu'un premier conduit de fluide (35) pour un premier fluide et un deuxième conduit de fluide (35) pour un deuxième fluide, ainsi qu'une ouverture d'entrée et de sortie (31, 32) pour le premier fluide et une ouverture d'entrée et de sortie (20, 21) pour le deuxième fluide sont configuré(e)s entre les plaques (17), où l'échangeur de chaleur (16) est doté d'ailettes ondulées (19) servant à l'équilibrage de la température, côté extérieur, d'un troisième fluide fourni à l'échangeur de chaleur (16) et / ou l'échangeur de chaleur (16) est doté d'ouvertures, de préférence de fentes, servant à la circulation du troisième fluide et à l'équilibrage de sa température et / ou l'échangeur de chaleur (16) est doté d'un troisième conduit de fluide (37) servant à la circulation du troisième fluide, en particulier de l'air.

6. Système (1) selon la revendication 5, **caractérisé en ce que** les ailettes ondulées (19) sont disposées, côté extérieur, sur un bloc (18) se composant de plaques (17) empilées les unes sur les autres, et / ou les ailettes ondulées (19) sont disposées entre les plaques (17).

7. Système (1) selon l'une des revendications 5 ou 6, **caractérisé en ce que** les plaques (17) sont configurées comme des plaques planes.

8. Système (1) selon l'une quelconque des revendications précédentes, **caractérisé en ce que**, concernant l'échangeur de chaleur (16), le premier fluide est du fluide frigorigène du circuit frigorifique (6), le deuxième fluide étant le liquide de refroidissement du circuit de liquide de refroidissement (2), et le troisième fluide est de l'air, en particulier de l'air à fournir à l'habitacle du véhicule automobile.

9. Système (1) selon l'une quelconque ou plusieurs des revendications précédentes 6 à 8, **caractérisé en ce que** l'air à fournir à l'habitacle du véhicule automobile peut être réchauffé au niveau de l'échangeur de chaleur (10) de l'évaporateur, en particulier au niveau de l'échangeur de chaleur (16).

10. Procédé conçu pour refroidir et / ou pour chauffer une batterie (3) d'un véhicule automobile, et un habitacle de véhicule automobile, avec un circuit frigorifique (6) comprenant un condenseur (11), un compresseur (7), un premier évaporateur (8) et un deuxième évaporateur (9), et avec un circuit de liquide de refroidissement (2) qui est couplé thermiquement à la batterie (3), tandis que, pour le refroidissement de la batterie (3), de la chaleur provenant de la batterie (3) au moyen du circuit de liquide de refroidissement (2) est transmise au deuxième évaporateur (9) au moyen d'un échangeur de chaleur (10) de l'évaporateur, et, pour le refroidissement de l'habitacle du véhicule automobile, de l'air est refroidi au niveau du premier évaporateur (8), où un premier pulseur (14) est disposé au niveau du premier évaporateur (8), **caractérisé en ce que** de l'air est réchauffé au niveau de l'échangeur de chaleur (10) de l'évaporateur, en particulier dans le cas d'un circuit frigorifique (6) coupé, et l'air réchauffé est fourni à l'habitacle du véhicule automobile et / ou à l'air ambiant, tandis qu'un deuxième pulseur (15) disposé au niveau de l'échangeur de chaleur de l'évaporateur fait circuler l'air passant devant l'échangeur de chaleur (10) de l'évaporateur et / ou le traversant, où en particulier un système (1) selon l'une quelconque ou plusieurs des revendications précédentes est utilisé.

11. Procédé selon la revendication 10, **caractérisé en ce que** l'air, après le réchauffement au niveau de l'échangeur de chaleur (10) de l'évaporateur, est fourni à l'habitacle du véhicule automobile et / ou dirigé dans l'air ambiant du véhicule automobile.

12. Procédé selon l'une ou plusieurs des revendications 10 ou 11, **caractérisé en ce que** l'air réchauffé au niveau de l'échangeur de chaleur (10) de l'évaporateur est réchauffé par un dispositif de chauffage électrique (5), en particulier un dispositif de chauffage - CTP - à coefficient de température positif, ledit chauffage se produisant avant, après ou pendant le passage de l'air devant l'échangeur de chaleur (10) de l'évaporateur.

13. Système de climatisation d'un véhicule automobile, **caractérisé en ce que** le système de climatisation du véhicule automobile comprend un système (1) selon l'une quelconque ou plusieurs des revendications 1 à 9.
